(19) **Europäisches Patentamt European Patent Office Office européen des brevets**

(11) **EP 3 611 078 B1**

(12) **EUROPEAN PATENT SPECIFICATION**

(45) Date of publication and mention of the grant of the patent:
**25.11.2020 Bulletin 2020/48**

(51) Int Cl.:
**B62D 6/00** *(2006.01)* **B62D 15/02** *(2006.01)*

(21) Application number: **18189639.0**

(22) Date of filing: **17.08.2018**

(54) **METHOD AND ARRANGEMENT FOR ENSURING ROAD TRACKING UP TO A PREDEFINED LATERAL ACCELERATION LIMIT IN A ROAD VEHICLE**

VERFAHREN UND ANORDNUNG ZUR SICHERSTELLUNG DER STRASSENVERFOLGUNG BIS ZU EINER VORGEGEBENEN QUERBESCHLEUNIGUNGSGRENZE IN EINEM STRASSENFAHRZEUG

PROCÉDÉ ET AGENCEMENT POUR ASSURER LE SUIVI DE LA ROUTE JUSQU'À UNE LIMITE D'ACCÉLÉRATION LATÉRALE PRÉDÉFINIE POUR UN VÉHICULE ROUTIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.02.2020 Bulletin 2020/08**

(73) Proprietors:
- **Zenuity AB**
  **417 56 Göteborg (SE)**
- **Volvo Car Corporation**
  **405 31 Göteborg (SE)**

(72) Inventors:
- **LIDANDER, Niklas**
  **431 41 MÖLNDAL (SE)**
- **JOHANNESSON MÅRDH, Lars**
  **423 51 TORSLANDA (SE)**
- **LÖFGREN, Marcus**
  **439 32 ONSALA (SE)**

(74) Representative: **Bergenstråhle Group AB**
**P.O. Box 17704**
**118 93 Stockholm (SE)**

(56) References cited:
**JP-A- H11 147 481    US-A1- 2013 060 414**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field

The present disclosure relates generally to a method and arrangement for ensuring road tracking up to a predefined lateral acceleration limit in a road vehicle having an autonomous steering function arranged to selectively apply a steering wheel overlay torque to a normal steering assistance torque in an electrical power assisted steering system of the road vehicle. It also relates to a road vehicle comprising such an arrangement.

Background

The use of power steering in road vehicles is well known, e.g. the use of electrical power assisted steering (EPAS). Such electrical power assisted steering includes electric motors that assists a driver of a road vehicle by adding an assistive torque to e.g. a steering column of the road vehicle. EPAS systems are used in road vehicles such as a cars, lorries, buses and trucks.

It is further known to use advanced driver assistance systems (ADAS) to help a driver of a road vehicle in the driving process. Such ADAS systems include autonomous steering systems, such as so-called Pilot Assist systems. Pilot Assist systems usually rely on a combination of camera and radar sensors to combine lane keeping aid (LKA), also called lane departure avoidance (LDA), with an adaptive cruise-control functionality, to help a driver to drive a road vehicle between lane side markers combined with keeping a preset distance to a preceding vehicle.

Pilot Assist systems are thus provided to help a driver of a road vehicle maintain the road vehicle in a desired lane whilst keeping a safe preset distance to a preceding vehicle. For lane keeping aid or lane centering systems where an EPAS is used, a steering wheel torque overlay, i.e. additional steering wheel torque on top of what would have been obtained by a base assist of the EPAS, is used for lateral position control.

As of 2018, ADAS functions are subject to Harmonized Technical United Nations Regulations for Wheeled Vehicles and regulated under R79 UNECE. The implication of this regulation is that a Pilot Assist function must, during good sensor conditions, guarantee road tracking up to a predefined lateral acceleration level which is decided by an Original Equipment Manufacturer (OEM). Moreover, a Pilot Assist function is considered to be in violation of R79 if a road is tracked with a lateral acceleration that is 0.3 m/s$^2$ higher than the predefined lateral acceleration level.

A straightforward technical solution to comply with R79 would be to reduce the road vehicle speed, so that the Pilot Assist path can be tracked with a lateral acceleration that is lower than the predefined lateral acceleration level. This may be done using a so-called Curve Speed Adaptation (CSA) system.

A Curve Speed Adaptation system aims to adapt the speed for an upcoming curve. Such a system aims to mimic a driver and take into consideration how the driver would behave if he/she were to drive. However, Pilot Assist functionality may be provided both with and without Curve Speed Adaptation.

Without Curve speed adaptation a technical solution for R79 could be that the Pilot Assist function simply limits the path curvature to incur a lateral acceleration that is always lower than the predefined lateral acceleration. In a sharp curve to the left this would mean that Pilot Assist would plan a path with a smaller curvature (higher radius) that leaves the road to the right.

A problem with only limiting the path curvature is that the driver will get an experience that the wheel angle controller controls the steering wheel along a path that moves the vehicle out of lane. In the left curve example described above, this would mean that a driver will in a hands-on situation experience that the Pilot Assist function applies torque to the right.

Summary

An object of the present invention is to provide an improved method for ensuring road tracking up to a predefined lateral acceleration limit in a road vehicle having an autonomous steering function.

The invention is defined by the appended independent claims. Embodiments are set forth in the appended dependent claims and in the figures.

According to a first aspect there is provided a method for ensuring road tracking up to a predefined lateral acceleration limit in a road vehicle having an autonomous steering function arranged to selectively apply a steering wheel overlay torque to a normal steering assistance torque in an electrical power assisted steering system of the road vehicle that comprises: setting the predetermined lateral acceleration limit; and obtaining a signal representing a current lateral acceleration of the road vehicle; differentiating the set predetermined lateral acceleration limit with the obtained current lateral acceleration signal to obtain a controller error; subjecting the controller error to a rate selector which is arranged to either output a positive, negative or zero torque rate depending on the current value of the controller error; arranging the rate selector to use a predetermined controller error tolerance dead zone interval having an upper limit and a lower limit; outputting by the rate selector, if the controller error is below or equal to the lower limit of the dead zone interval or if a driver is interacting, a positive torque rate; outputting by the rate selector, if the controller error is above or equal to the upper limit of the dead zone interval, a negative torque rate; outputting by the rate selector, if the controller error is between the lower limit and the upper limit of the dead zone interval, a zero torque rate; integrating the output torque rate to provide a torque limit for the steering wheel overlay torque.

In a further embodiment the method further comprises lowpass filtering the current lateral acceleration signal to retrieve a smoother signal.

In a yet further embodiment the method further comprises using a Pilot Assist function as the autonomous steering function.

In a still further embodiment the method comprises establishing if a driver is interacting from measurements of steering column torque.

In an additional embodiment the method further comprises arranging the rate selector to use a dead zone with an interval between a lower limit of $0.0 m/s^2$ and an upper limit of $0.3\ m/s^2$.

In yet an additional embodiment the method further comprises arranging the rate selector to use a dead zone with an interval between a lower limit of $-0.1 m/s^2$ and an upper limit of $0.2\ m/s^2$.

Furthermore, here envisaged is an arrangement for ensuring road tracking up to a predefined lateral acceleration limit in a road vehicle having an autonomous steering function.

Thus, according to a second aspect there is provided an arrangement for ensuring road tracking up to a predefined lateral acceleration limit in a road vehicle having an autonomous steering function arranged to selectively apply a steering wheel overlay torque to a normal steering assistance torque in an electrical power assisted steering system of the road vehicle, which arrangement further comprises: a closed loop controller having a differentiator for differentiating a set predetermined lateral acceleration limit with an obtained current lateral acceleration signal of the road vehicle to obtain a controller error; a rate selector which is arranged to either output a positive, negative or zero torque rate depending on the current value of the controller error; the rate selector being arranged to use a predetermined controller error tolerance dead zone interval having an upper limit and a lower limit; the rate selector further, if the controller error e is below or equal to the lower limit of the dead zone or if a driver is interacting, being arranged to output a positive torque rate; the rate selector further, if the controller error is above or equal to the upper limit of the dead zone, being arranged to output a negative torque rate; the rate selector further, if the controller error is between the lower limit and the upper limit of the dead zone, being arranged to output a zero torque rate; an integrator being arranged to integrate the output torque rate to provide a torque limit for the steering wheel overlay torque.

In a further embodiment the arrangement further comprises a lowpass filter arranged to filter a current lateral acceleration signal to retrieve a smoother signal.

In a yet further embodiment the arrangement further comprises that the autonomous steering function is a Pilot Assist function.

In a still further embodiment the arrangement is further arranged to establish if a driver is interacting from measurements of steering column torque.

In an additional embodiment the arrangement further comprises that the rate selector is arranged to use a dead zone with an interval between a lower limit of $0.0 m/s^2$ and an upper limit of $0.3\ m/s^2$.

In yet an additional embodiment the arrangement further comprises that the rate selector is arranged to use a dead zone with an interval between a lower limit of $-0.1 m/s^2$ and an upper limit of $0.2\ m/s^2$.

Also, here envisaged is a road vehicle that comprises an arrangement as described herein.

The above embodiments have the beneficial effects of ensuring road tracking up to a predefined lateral acceleration limit in a road vehicle having an autonomous steering function.

Brief description of drawings

In the following, embodiments herein will be described in greater detail by way of example only with reference to attached drawings, in which:

Fig. 1 illustrates schematically a closed loop controller of an arrangement for ensuring road tracking up to a predefined lateral acceleration limit in a road vehicle according to an example embodiment;

Fig. 2 illustrates schematically a flowchart of a rate selector arranged to output a torque rate required to adjust a torque limit for a steering wheel overlay torque according to an example embodiment;

Fig. 3 illustrates schematically a road vehicle that comprises an arrangement for ensuring road tracking up to a predefined lateral acceleration limit in a road vehicle according to an example embodiment.

Description of embodiments

In the following will be described some example embodiments of a method and arrangement 2 for ensuring road tracking up to a predefined lateral acceleration limit $a_{lat,R79}$ in a road vehicle 1 having an autonomous steering function 3.

The autonomous steering function 3 may be a Pilot Assist system arranged to selectively apply a steering wheel overlay torque $T_{PA}$ to a normal steering assistance torque $T_a$ in an electrical power assisted steering system 4 of the road vehicle 1, i.e. applying an additional steering wheel torque $T_{PA}$ on top of what would have been provided by a base assist of an electrical power assisted steering system 4.

In order to understand how a driver of a road 1 vehicle experiences overlay torque from an autonomous steering function 3, such as a Pilot Assist function, we first need to establish a model of the steering dynamics of a road vehicle 1 steering system.

The steering system dynamics can be modelled with newtons second law

$$J_s \ddot{\theta} = B\left(\dot{\theta}, \theta\right) + \beta F_r\left(\theta, v, m, J_v, c_f, c_r, l_r\right) + \gamma T_a\left(\ddot{\theta}, \dot{\theta}, \theta, v, T_c\right) + \gamma T_{PA} + T_c \quad \text{(Eq1)}$$

In steady state: $\ddot{\theta} = 0$, $\dot{\theta} = 0$

$$0 = \beta F_r\left(\theta, v, m, J_v, c_f, c_r, l_r\right) + \gamma T_a\left(\theta, v, T_c\right) + \gamma T_{PA} + T_c \quad \text{(Eq 2)}$$

$\theta$: Steering wheel angle, $J_s$: inertia of steering system, $B$: mechanical damping of steering system, $\beta$: Mechanical ratio converting from lateral force on the wheels to torque on the steering wheel, $F_r$: Wheel forces, $v$: vehicle speed, $m$: vehicle mass, $J_v$: vehicle inertia, $c_f$: cornering stiffness front (tyre parameter), $c_r$: cornering stiffness rear (tyre parameter), $l_r$: distance from rear wheels axis to centre of gravity, $\gamma$: Mechanical ratio converting from torque at the electrical power assist motor to torque on the steering wheel, $T_a$: Torque from the electrical power assist, $T_{PA}$: Overlay torque from the Pilot Assist function, $T_c$: Steering wheel column torque

Equation 2 above shows the torque balance in a steady state cornering situation. The well-known kinetic bicycle model, e.g. as described by Rajamani, Rajesh, "Vehicle Dynamics and Control" Second Edition, Chapter 2 titled "Lateral Vehicle Dynamics", Springer US, Published 2012, pp. 20-31, gives that for a given mass, inertia and tyres, the wheel forces are well approximated as linear in the lateral acceleration, as illustrated in Equation 3 below

$$F_r\left(\theta, v, m, J_v, c_f, c_r, l_r\right) \approx k\left(m, J_v, c_f, c_r, l_r\right) a_{lat}. \quad \text{(Eq 3)}$$

In steady state at the R79 UNECE acceleration limit $a_{lat,R79}$ the following relation, Equation 4, approximately holds

$$k\left(m, J_v, c_f, c_r, l_r\right) a_{lat,R79} = -\frac{\gamma}{\beta} T_a\left(\theta, v\right) - \frac{\gamma}{\beta} T_{PA,R79} \quad \text{(Eq 4)}$$

where $yT_a\left(\theta, v\right)$ corresponds to an active return functionality. An active return functionality applies a torque opposite to a steering wheel torque, in order to return the steering wheel angle to 0°. This functionality can be seen when a driver releases a steering wheel and the steering wheel slowly returns to a 0° steering wheel angle.

Since the purpose of a Pilot Assist function is to assist a driver of a road vehicle 1 in tracking a path both steering wheel column torque $T_c$ and torque from the electrical power assist $T_a$ will be close to zero as long as a driver is not actively steering, overriding or assisting the Pilot Assist function.

In a steady state cornering situation overlay torque $T_{PA}$ from the Pilot Assist function must counteract the wheel forces $F_r$. If a driver of the road vehicle 1 keeps his or her hands on the steering wheel and has a desire to stay in lane during a steady state cornering situation, a reduction of overlay torque $T_{PA}$ from the Pilot Assist function must be balanced out by an increase in steering wheel column torque $T_c$. The increase in steering wheel column torque $T_c$ is provided by a driver's hands which means that a driver will experience the reduction in overlay torque $T_{PA}$ from the Pilot Assist function as if the Pilot Assist function is pulling the steering wheel towards a path that leaves the lane.

The proposed technical solution aims at saturating the Pilot Assist overlay torque $T_{PA}$ at a torque limit close to a torque from the Pilot Assist function $T_{PA,R79}$, which in steady state results in the predefined R79 lateral acceleration, $a_{lat,R79}$.

If the overshoot in torque $T_{PA}$ from the Pilot Assist function above $T_{PA,R79}$ is small a driver will get the experience that the Pilot Assist function does it best to keep the road curvature but that the function is not strong enough and needs some torque assistance from the driver in order to keep the road vehicle in lane during a steep curve.

A challenge is that the torque $T_{PA,R79}$ from the Pilot Assist function, which in steady state results in the predefined R79 lateral acceleration, $a_{lat,R79}$, is strongly dependent on the mass, inertia, tyres, centre of gravity and electrical power assistance, $T_a$, which all are parameters that vary between drive cycles and variants of the road vehicle 1 type.

In order to be robust against variations in mass, inertia, centre of gravity and to tuning of the electrical power assistance, $T_a$, feedback on lateral acceleration $a_{lat}$ is used to control the Pilot Assist overlay torque limits close to the torque $T_{PA,R79}$ from the Pilot Assist function, which in steady state results in the predefined R79 lateral acceleration, $a_{lat,R79}$.

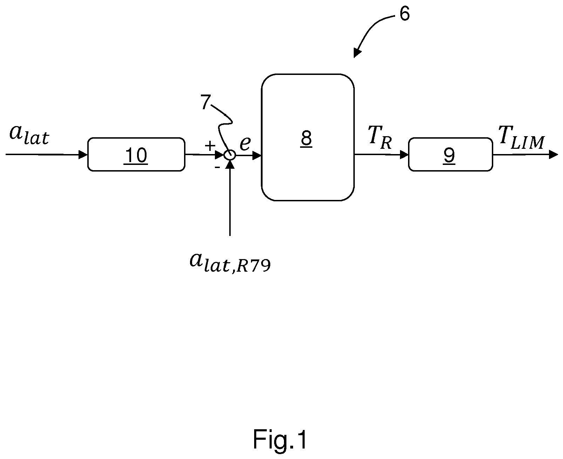

A block diagram of an arrangement comprising a closed loop controller suitable for use with the proposed method is illustrated in figure 1.

A lateral acceleration error e is obtained by differentiating 7 a current lateral acceleration $a_{lat}$ with a set predetermined lateral acceleration limit $a_{lat,R79}$. The lateral acceleration error e then enters a rate selector 8 and will depending on the current value of the lateral acceleration error e, either output a positive, negative or zero torque rate $T_R$. The rate selector 8 uses a predetermined controller error e tolerance dead zone interval having an upper limit and a lower limit.

If the controller error e is below or equal to the lower limit of the dead zone interval or if a driver is interacting the rate selector 8 should be arranged to output a positive torque rate $T_R$. The torque limit will then increase until it reaches the upper saturation limit, which should be set to a value close to $T_{PA,R79}$. Establishing if a driver is interacting may e.g. in a known manner, be made from measurements of steering column torque.

If the controller error e is above or equal to the upper limit of the dead zone interval the rate selector 8 should be arranged to output a negative torque rate $T_R$. This torque rate $T_R$ also changes depending on if an overlay torque $T_{PA}$ from an autonomous steering function 3, such as a Pilot Assist function, is limited. The torque limit will decrease until the controller error e enters the interval of the dead zone or if the lower saturation limit is reached. This will restrict the overlay torque $T_{PA}$ from an autonomous steering function 3 and a driver will feel like the autonomous steering function 3 is not strong enough to handle a steep curve. To keep the road vehicle 1 in lane a driver will need to add some extra steering wheel torque.

If the controller error e is between the lower limit and the upper limit of the dead zone interval the rate selector 8 should be arranged to output a zero torque rate $T_R$. This means that an autonomous steering function 3, such as a Pilot Assist function, will behave as normal when a road vehicle 1 is driving with an allowed lateral acceleration.

The output torque rate $T_R$ should be integrated 9 to provide a torque limit $T_{LIM}$ for the steering wheel overlay torque $T_{PA}$.

The current lateral acceleration signal $a_{lat}$ should preferably be lowpass filtered 10 to retrieve a smoother signal.

In one embodiment the rate selector 8 is arranged to use a dead zone with an interval between a lower limit of $0.0 m/s^2$ and an upper limit of $0.3\ m/s^2$, i.e. with an upper limit selected in correspondence with R79 UNECE, such that a road cannot be tracked with a lateral acceleration $a_{lat}$ that is more than 0.3 m/s$^2$ higher than the predefined lateral acceleration level $a_{lat,R79}$. However, in order to avoid unwanted sawtooth behaviour in the torque limit $T_{LIM}$ output when driving close to the R79 UNECE lateral acceleration limit $a_{lat,R79}$, the rate selector 8 should preferably be arranged to use a dead zone with an interval between a lower limit of $-0.1 m/s^2$ and an upper limit of $0.2\ m/s^2$.

Thus, the method for ensuring road tracking up to a predefined lateral acceleration limit $a_{lat,R79}$ in a road vehicle 1 having an autonomous steering function 3 arranged to selectively apply a steering wheel overlay torque $T_{PA}$ to a normal steering assistance torque $T_a$ in an electrical power assisted steering system 4 of the road vehicle 1 will now be described in more detail.

The method comprises setting the predetermined lateral acceleration limit $a_{lat,R79}$ and obtaining, e.g. from an onboard accelerometer, a signal representing a current lateral acceleration $a_{lat}$ of the road vehicle 1.

The method further comprises differentiating the set predetermined lateral acceleration limit $a_{lat,R79}$ with the obtained current lateral acceleration signal $a_{lat}$ to obtain a controller error e , and subjecting the controller error e to a rate selector 8 which is arranged to either output a positive, negative or zero torque rate $T_R$ depending on the current value of the controller error e .

The method also comprises arranging the rate selector 8 to use a predetermined controller error e tolerance dead zone interval having an upper limit and a lower limit and outputting by the rate selector 8, if the controller error e is below or equal to the lower limit of the dead zone interval or if a driver is interacting, a positive torque rate $T_R$. Outputting by the rate selector 8, if the controller error e is above or equal to the upper limit of the dead zone interval, a negative torque rate $T_R$, and outputting by the rate selector 8, if the controller error e is between the lower limit and the upper limit of the dead zone interval, a zero torque rate $T_R$. In order to provide a torque limit $T_{LIM}$ for the steering wheel overlay torque $T_{PA}$ the method also comprises integrating the output torque rate $T_R$ to provide this torque limit $T_{LIM}$ for the steering wheel overlay torque $T_{PA}$.

Optionally the method further comprises lowpass filtering 10 the current lateral acceleration signal $a_{lat}$ to retrieve

a smoother signal.

In further embodiment the method comprises using a Pilot Assist function as the autonomous steering function 3.

In a still further embodiment the method comprises establishing if a driver is interacting from measurements of steering column torque.

In still further embodiments the method further comprises arranging the rate selector 8 to use a dead zone with an interval between a lower limit of 0.0$m/s^2$ and an upper limit of 0.3 $m/s^2$ or preferably, in order to avoid unwanted sawtooth behaviour in the torque limit $T_{LIM}$ output when driving close to the R79 UNECE lateral acceleration limit $a_{lat,R79}$, a dead zone with an interval between a lower limit of -0.1$m/s^2$ and an upper limit of 0.2 $m/s^2$.

Furthermore, here envisaged is an arrangement 6, as illustrated in figure 1, for ensuring road tracking up to a predefined lateral acceleration limit $a_{lat,R79}$ in a road vehicle 1 having an autonomous steering function 3 arranged to selectively apply a steering wheel overlay torque $T_{PA}$ to a normal steering assistance torque $T_a$ in an electrical power assisted steering system 4 of the road vehicle 1.

The arrangement 6 comprises a closed loop controller having a differentiator 7 for differentiating a set predetermined lateral acceleration limit $a_{lat,R79}$ with an obtained current lateral acceleration signal $a_{lat}$ of the road vehicle 1 to obtain a controller error $e$.

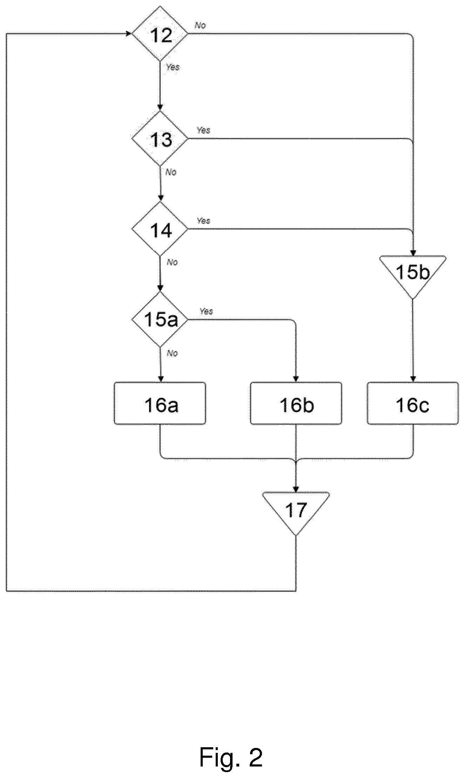

A rate selector 8 of the arrangement 6, a flowchart of the functioning of which is schematically illustrated in figure 2, is further arranged to either output a positive 16c, negative 16b or zero 16a torque rate $T_R$ depending on the current value of the controller error $e$. The rate selector 8 is arranged to use a predetermined controller error $e$ tolerance dead zone interval having an upper limit and a lower limit.

The rate selector 8 is further arranged such that if the autonomous steering function 3 is not active 12, the controller error $e$ is below or equal to the lower limit of the dead zone 14 or if a driver is interacting 13, it is arranged to output a positive torque rate 16c. The arrangement 6 may be arranged to establish if a driver is interacting from measurements of steering column torque in a per se well known manner.

The rate selector 8 of the arrangement 6 is further arranged such that if the controller error $e$ is above or equal to the upper limit of the dead zone 15a, it will output a negative torque rate 16b.

Further, if the controller error $e$ is between the lower limit and the upper limit of the dead zone, it is arranged to output a zero torque rate 16a. Thus, the rate selector will output 17 either a positive torque rate 16c, a negative torque rate 16b or a zero torque rate 16a.

An integrator 9 is arranged to integrate the output torque rate $T_R$ to provide a torque limit $T_{LIM}$ for the steering wheel overlay torque $T_{PA}$.

In a further embodiment the arrangement 6 also comprises a lowpass filter 10 arranged to filter a current lateral acceleration signal $a_{lat}$ to retrieve a smoother signal.

In some embodiments the autonomous steering function 3 of the arrangement 6 is a Pilot Assist function.

In still further embodiments the rate selector 8 is arranged to use a dead zone with an interval between a lower limit of 0.0$m/s^2$ and an upper limit of 0.3 $m/s^2$ or preferably, in order to avoid unwanted sawtooth behaviour in the torque limit $T_{LIM}$ output when driving close to the R79 UNECE lateral acceleration limit $a_{lat,R79}$, a dead zone with an interval between a lower limit of -0.1$m/s^2$ and an upper limit of 0.2 $m/s^2$.

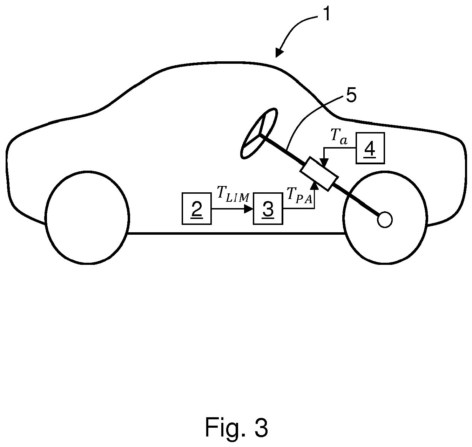

Also, here envisaged is a road vehicle 1, as illustrated in figure 3, having an autonomous steering function 3 arranged to selectively apply, to e.g. a steering column 5 or equivalent, a steering wheel overlay torque $T_{PA}$ to a normal steering assistance torque $T_a$ in an electrical power assisted steering system 4 that comprises an arrangement 2 for ensuring road tracking up to a predefined lateral acceleration limit $a_{lat,R79}$ as set forth herein.

The invention is defined by the appended claims.

## Claims

1. Method for ensuring road tracking up to a predefined lateral acceleration limit ($a_{lat,R79}$) in a road vehicle (1) having an autonomous steering function (3) arranged to selectively apply a steering wheel overlay torque ($T_{PA}$) to a normal steering assistance torque ($T_a$) in an electrical power assisted steering system (4) of the road vehicle (1),
   **characterized in that** it comprises:

      setting the predetermined lateral acceleration limit ($a_{lat,R79}$); and
      obtaining a signal representing a current lateral acceleration ($a_{lat}$) of the road vehicle (1);
      differentiating the set predetermined lateral acceleration limit ($a_{lat,R79}$) with the obtained current lateral acceleration signal ($a_{lat}$) to obtain a controller error ($e$);
      subjecting the controller error ($e$) to a rate selector (8) which is arranged to either output a positive, negative or zero torque rate ($T_R$) depending on the current value of the controller error ($e$);
      arranging the rate selector (8) to use a predetermined controller error ($e$) tolerance dead zone interval having an upper limit and a lower limit;
outputting by the rate selector (8), if the controller error ($e$) is below or equal to the lower limit of the dead zone interval or if a driver is interacting, a positive torque rate ($T_R$);
outputting by the rate selector (8), if the controller error ($e$) is above or equal to the upper limit of the dead zone interval, a negative torque rate ($T_R$);
outputting by the rate selector (8), if the controller error ($e$) is between the lower limit and the upper limit of the dead zone interval, a zero torque rate ($T_R$);
integrating the output torque rate ($T_R$) to provide a torque limit ($T_{LIM}$) for the steering wheel overlay torque ($T_{PA}$).

2. A method (1) according to claim 1, wherein it further comprises lowpass filtering the current lateral acceleration signal ($a_{lat}$) to retrieve a smoother signal.

3. A method (1) according to any one of claims 1 or 2, wherein it further comprises using a Pilot Assist function as the autonomous steering function (3).

4. A method (1) according to any one of claims 1 to 3, wherein it further comprises establishing if a driver is interacting from measurements of steering column torque.

5. A method (1) according to any one of claims 1 to 4, wherein it further comprises arranging the rate selector (8) to use a dead zone with an interval between a lower limit of $0.0 m/s^2$ and an upper limit of $0.3\ m/s^2$.

6. A method (1) according to any one of claims 1 to 4, wherein it further comprises arranging the rate selector (8) to use a dead zone with an interval between a lower limit of $-0.1 m/s^2$ and an upper limit of $0.2\ m/s^2$.

7. Arrangement (2) for ensuring road tracking up to a predefined lateral acceleration limit ($a_{lat,R79}$) in a road vehicle (1) having an autonomous steering function (3) arranged to selectively apply a steering wheel overlay torque ($T_{PA}$) to a normal steering assistance torque ($T_a$) in an electrical power assisted steering system (4) of the road vehicle (1), **characterized in that** it further comprises:

a closed loop controller (6) having a differentiator (7) for differentiating a set predetermined lateral acceleration limit ($a_{lat,R79}$) with an obtained current lateral acceleration signal ($a_{lat}$) of the road vehicle (1) to obtain a controller error ($e$);
a rate selector (8) which is arranged to either output a positive, negative or zero torque rate ($T_R$) depending on the current value of the controller error ($e$);
the rate selector (8) being arranged to use a predetermined controller error ($e$) tolerance dead zone interval having an upper limit and a lower limit;
the rate selector (8) further, if the controller error ($e$) is below or equal to the lower limit of the dead zone or if a driver is interacting, being arranged to output a positive torque rate ($T_R$);
the rate selector (8) further, if the controller error ($e$) is above or equal to the upper limit of the dead zone, being arranged to output a negative torque rate ($T_R$);
the rate selector (8) further, if the controller error ($e$) is between the lower limit and the upper limit of the dead zone, being arranged to output a zero torque rate ($T_R$);
an integrator (9) being arranged to integrate the output torque rate ($T_R$) to provide a torque limit ($T_{LIM}$) for the steering wheel overlay torque ($T_{PA}$).

8. An arrangement (2) according to claim 7, wherein it further comprises a lowpass filter (10) arranged to filter a current lateral acceleration signal ($a_{lat}$) to retrieve a smoother signal.

9. An arrangement (2) according to any one of claims 7 or 8, wherein it further comprises that the autonomous steering function (3) is a Pilot Assist function.

10. An arrangement (2) according to any one of claims 7 to 9, wherein it further is arranged to establish if a driver is interacting from measurements of steering column torque.

11. An arrangement (2) according to any one of claims 7 to 10, wherein the rate selector (8) is arranged to use a dead zone with an interval between a lower limit of $0.0 m/s^2$ and an upper limit of $0.3\ m/s^2$.

12. An arrangement (2) according to any one of claims 7 to 11, wherein the rate selector (8) is arranged to use a dead zone with an interval between a lower limit of -0.1$m/s^2$ and an upper limit of 0.2 $m/s^2$.

**13.** A road vehicle (1), **characterized in that** it comprises an arrangement (2) according to any one of claims 7 to 12.

**Patentansprüche**

**1.** Verfahren zur Sicherstellung einer Straßenverfolgung bis zu einer vorgegebenen Querbeschleunigungsgrenze ($\alpha_{lat,R79}$) in einem Straßenfahrzeug (1) mit einer autonomen Lenkfunktion (3), die angeordnet ist, selektiv ein Lenkradüberlagerungsdrehmoment ($T_{PA}$) bei einem normalen Lenkunterstützungsdrehmoment ($T_\alpha$) in einem stromgestützten Lenksystem (4) des Straßenfahrzeugs (1) anzuwenden,
**dadurch gekennzeichnet, dass** es umfasst:

Einstellen des vorgegebenen Querbeschleunigungsgrenzwerts ($\alpha_{lat,R79}$); und
Erhalten eines Signals, das eine aktuelle Querbeschleunigung ($\alpha_{lat}$) des Straßenfahrzeugs (1) darstellt;
Differenzieren des eingestellten vorgegebenen Querbeschleunigungsgrenzwerts ($\alpha_{lat,R79}$) mit dem erhaltenen aktuellen Querbeschleunigungssignal ($\alpha_{lat}$), um einen Steuerungsfehler (e) zu erhalten;
Unterziehen des Steuerungsfehlers (e) einem Ratenauswähler (8), der angeordnet ist, entweder eine positive, negative oder Null-Drehmomentrate ($T_R$) auszugeben, abhängig von dem aktuellen Wert des Steuerungsfehlers (e);
Anordnen des Ratenauswählers (8), ein vorgegebenes Steuerungsfehler- (e) Toleranztotzonenintervall mit einem oberen Grenzwert und einem unteren Grenzwert zu verwenden;
Ausgeben durch den Ratenauswähler (8), falls der Steuerungsfehler (e) unter oder gleich dem unteren Grenzwert des Totzonenintervalls ist oder falls ein Fahrer interagiert, einer positiven Drehmomentrate ($T_R$);
Ausgeben durch den Ratenauswähler (8), falls der Steuerungsfehler (e) über oder gleich dem oberen Grenzwert des Totzonenintervalls ist, einer negativen Drehmomentrate ($T_R$);
Ausgeben durch den Ratenauswähler (8), falls der Steuerungsfehler (e) zwischen dem unteren Grenzwert und dem oberen Grenzwert des Totzonenintervalls ist, einer Null-Drehmomentrate ($T_R$);
Integrieren der ausgegebenen Drehmomentrate ($T_R$), um einen Drehmomentgrenzwert ($T_{LIM}$) für das Lenkradüberlagerungsdrehmoment ($T_{PA}$) bereitzustellen.

**2.** Verfahren (1) nach Anspruch 1, wobei es weiter Tiefpassfiltern des aktuellen Querbeschleunigungssignals ($\alpha_{lat}$) umfasst, um ein glatteres Signal zu erlangen.

**3.** Verfahren (1) nach einem der Ansprüche 1 oder 2, wobei es weiter Verwenden einer Pilotunterstützungsfunktion als die autonome Lenkfunktion (3) umfasst.

**4.** Verfahren (1) nach einem der Ansprüche 1 bis 3, wobei es weiter Etablieren, ob ein Fahrer interagiert, aus Messungen von Lenksäulendrehmoment umfasst.

**5.** Verfahren (1) nach einem der Ansprüche 1 bis 4, wobei es weiter Anordnen des Ratenauswählers (8), eine Totzone mit einem Intervall zwischen einem unteren Grenzwert von 0,0 m/s$^2$ und einem oberen Grenzwert von 0,3 m/s$^2$ zu verwenden, umfasst.

**6.** Verfahren (1) nach einem der Ansprüche 1 bis 4, wobei es weiter Anordnen des Ratenauswählers (8), eine Totzone mit einem Intervall zwischen einem unteren Grenzwert von -0,1 m/s$^2$ und einem oberen Grenzwert von 0,2 m/s$^2$ zu verwenden, umfasst.

**7.** Anordnung (2) zur Sicherstellung einer Straßenverfolgung bis zu einer vorgegebenen Querbeschleunigungsgrenze ($\alpha_{lat,R79}$) in einem Straßenfahrzeug (1) mit einer autonomen Lenkfunktion (3), die angeordnet ist, selektiv ein Lenkradüberlagerungsdrehmoment ($T_{PA}$) bei einem normalen Lenkunterstützungsdrehmoment ($T_\alpha$) in einem stromgestützten Lenksystem (4) des Straßenfahrzeugs (1) anzuwenden,
**dadurch gekennzeichnet, dass** sie weiter umfasst:

eine Regelkreissteuerung (6) mit einem Differentiator (7) zum Differenzieren eines eingestellten vorgegebenen Querbeschleunigungsgrenzwerts ($\alpha_{lat,R79}$) mit einem erhaltenen aktuellen Querbeschleunigungssignal ($\alpha_{lat}$) des Straßenfahrzeugs (1), um einen Steuerungsfehler (e) zu erhalten;
einen Ratenauswähler (8), der angeordnet ist, entweder eine positive, negative oder Null-Drehmomentrate ($T_R$)

auszugeben, abhängig von dem aktuellen Wert des Steuerungsfehlers (e);

wobei der Ratenauswähler (8) angeordnet ist, ein vorgegebenes Steuerungsfehler- (e) Toleranztotzonenintervall mit einem oberen Grenzwert und einem unteren Grenzwert zu verwenden;

wobei der Ratenauswähler (8) weiter, falls der Steuerungsfehler (e) unter oder gleich dem unteren Grenzwert der Totzone ist oder falls ein Fahrer interagiert, angeordnet ist, eine positive Drehmomentrate ($T_R$) auszugeben;

wobei der Ratenauswähler (8) weiter, falls der Steuerungsfehler (e) über oder gleich dem oberen Grenzwert der Totzone ist, angeordnet ist, eine negative Drehmomentrate ($T_R$) auszugeben;

wobei der Ratenauswähler (8) weiter, falls der Steuerungsfehler (e) zwischen dem unteren Grenzwert und dem oberen Grenzwert der Totzone ist, angeordnet ist, eine Null-Drehmomentrate ($T_R$) auszugeben;

wobei ein Integrator (9) angeordnet ist, die Drehmomentrate ($T_R$) zu integrieren, um einen Drehmomentgrenzwert ($T_{LIM}$) für das Lenkradüberlagerungsdrehmoment ($T_{PA}$) bereitzustellen.

8. Anordnung (2) nach Anspruch 7, wobei sie weiter ein Tiefpassfilter (10) umfasst, das angeordnet ist, ein aktuelles Querbeschleunigungssignal ($\alpha_{lat}$) zu filtern, um ein glatteres Signal zu erlangen.

9. Anordnung (2) nach einem der Ansprüche 7 oder 8, wobei sie weiter umfasst, dass die autonome Lenkfunktion (3) eine Pilotunterstützungsfunktion ist.

10. Anordnung (2) nach einem der Ansprüche 7 bis 9, wobei sie weiter angeordnet ist, aus Messungen von Lenksäulendrehmoment zu etablieren, ob ein Fahrer interagiert.

11. Anordnung (2) nach einem der Ansprüche 7 bis 10, wobei der Ratenauswähler (8) angeordnet ist, eine Totzone mit einem Intervall zwischen einem unteren Grenzwert von 0,0 m/s$^2$ und einem oberen Grenzwert von 0,3 m/s$^2$ zu verwenden.

12. Verfahren (2) nach einem der Ansprüche 7 bis 11, wobei der Ratenauswähler (8) angeordnet ist, eine Totzone mit einem Intervall zwischen einem unteren Grenzwert von -0,1 m/s$^2$ und einem oberen Grenzwert von 0,2 m/s$^2$ zu verwenden.

13. Straßenfahrzeug (1), **dadurch gekennzeichnet, dass** es eine Anordnung (2) nach einem der Ansprüche 7 bis 12 umfasst.

**Revendications**

1. Procédé pour assurer le suivi de la route jusqu'à une limite d'accélération latérale prédéfinie ($\alpha_{lat,R79}$) dans un véhicule routier (1) ayant une fonction de direction autonome (3) agencée pour appliquer sélectivement un couple de recouvrement de volant ($T_{PA}$) à un couple d'assistance de direction normal ($T_\alpha$) dans un système de direction assistée électrique (4) du véhicule routier (1),
**caractérisé en ce qu'**il comprend :

le réglage de la limite d'accélération latérale prédéterminée ($\alpha_{lat,R79}$) ; et

l'obtention d'un signal représentant une accélération latérale actuelle ($\alpha_{lat}$) du véhicule routier (1) ;

la différenciation de la limite d'accélération latérale prédéterminée ($\alpha_{lat,R79}$) définie avec le signal d'accélération latérale actuelle ($\alpha_{lat}$) obtenu pour obtenir une erreur de contrôleur (e) ;

la soumission de l'erreur de contrôleur (e) à un sélecteur de taux (8) qui est agencé pour produire un taux de couple ($T_R$) positif, négatif ou nul en fonction de la valeur actuelle de l'erreur du contrôleur (e) ;

l'agencement du sélecteur de taux (8) pour utiliser un intervalle de zone morte de tolérance prédéterminé de l'erreur de contrôleur (e) ayant une limite supérieure et une limite inférieure ;

la production par le sélecteur de taux (8), si l'erreur du contrôleur (e) est inférieure ou égale à la limite inférieure de l'intervalle de zone morte ou si un conducteur interagit, d'un taux de couple (TR) positif ;

la production par le sélecteur de taux (8), si l'erreur du contrôleur (e) est supérieure ou égale à la limite supérieure de l'intervalle de zone morte, d'un taux de couple (TR) négatif ;

la production par le sélecteur de taux (8), si l'erreur du contrôleur (e) se situe entre la limite inférieure et la limite supérieure de l'intervalle de zone morte, d'un taux de couple (TR) nul ;

l'intégration du taux de couple (TR) produit pour fournir une limite de couple ($T_{LIM}$) pour le couple de recouvrement de volant ($T_{PA}$).

2. Procédé (1) selon la revendication 1, dans lequel il comprend en outre un filtrage passe-bas du signal d'accélération latérale actuelle ($\alpha_{lat}$) pour récupérer un signal plus régulier.

3. Procédé (1) selon l'une quelconque des revendications 1 ou 2, dans lequel il comprend en outre l'utilisation d'une fonction Pilot Assist en tant que fonction de direction autonome (3).

4. Procédé (1) selon l'une quelconque des revendications 1 à 3, dans lequel il comprend en outre le fait d'établir si un conducteur interagit à partir de mesures du couple de colonne de direction.

5. Procédé (1) selon l'une quelconque des revendications 1 à 4, dans lequel il comprend en outre l'agencement du sélecteur de taux (8) pour utiliser une zone morte avec un intervalle entre une limite inférieure de 0.0 m/s$^2$ et une limite supérieure de 0,3 $m/s^2$.

6. Procédé (1) selon l'une quelconque des revendications 1 à 4, dans lequel il comprend en outre l'agencement du sélecteur de taux (8) pour utiliser une zone morte avec un intervalle entre une limite inférieure de -0.1 m/s$^2$ et une limite supérieure de 0,2 $m/s^2$.

7. Agencement (2) pour assurer le suivi de la route jusqu'à une limite d'accélération latérale prédéfinie ($\alpha_{lat,R79}$) dans un véhicule routier (1) ayant une fonction de direction autonome (3) agencée pour appliquer sélectivement un couple de recouvrement de volant ($T_{PA}$) à un couple d'assistance de direction normal ($T_a$) dans un système de direction assistée électrique (4) du véhicule routier (1),
**caractérisé en ce qu'**il comprend en outre :

    un contrôleur en boucle fermée (6) ayant un différentiateur (7) pour différencier une limite d'accélération latérale prédéterminée ($\alpha_{lat,R79}$) définie avec un signal d'accélération latérale actuelle ($\alpha_{lat}$) obtenu du véhicule routier (1) pour obtenir une erreur de contrôleur ($e$) ;
    un sélecteur de taux (8) qui est agencé pour produire un taux de couple *(TR)* positif, négatif ou nul en fonction de la valeur actuelle de l'erreur du contrôleur ($e$) ;
    le sélecteur de taux (8) étant agencé pour utiliser un intervalle de zone morte de tolérance prédéterminé de l'erreur de contrôleur ($e$) ayant une limite supérieure et une limite inférieure ;
    le sélecteur de taux (8), si l'erreur du contrôleur ($e$) est inférieure ou égale à la limite inférieure de la zone morte ou si un conducteur interagit, étant agencé pour produire un taux de couple *(TR)* positif ;
    le sélecteur de taux (8), si l'erreur du contrôleur ($e$) est supérieure ou égale à la limite supérieure de la zone morte, étant agencé pour produire un taux de couple *(TR)* négatif ;
    le sélecteur de taux (8), si l'erreur du contrôleur ($e$) se situe entre la limite inférieure et la limite supérieure de la zone morte, étant agencé pour produire un taux de couple ($T_R$) égal à zéro ;
    un intégrateur (9) étant agencé pour intégrer le taux de couple *(TR)* produit pour fournir une limite de couple ($T_{LIM}$) pour couple de recouvrement de volant ($T_{PA}$).

8. Agencement (2) selon la revendication 7, dans lequel il comprend en outre un filtre passe-bas (10) agencé sur un signal d'accélération latérale actuelle ($\alpha_{lat}$) pour récupérer un signal plus régulier.

9. Agencement (2) selon l'une quelconque des revendications 7 ou 8, dans lequel il comprend en outre que la fonction de direction autonome (3) est une fonction Pilot Assist.

10. Agencement (2) selon l'une quelconque des revendications 7 à 9, dans lequel il est en outre agencé pour établir si un conducteur interagit à partir de mesures du couple de colonne de direction.

11. Agencement (2) selon l'une quelconque des revendications 7 à 10, dans lequel le sélecteur de taux (8) est agencé pour utiliser une zone morte avec un intervalle entre une limite inférieure de 0.0 m/s$^2$ et une limite supérieure de 0,3 $m/s^2$.

12. Agencement (2) selon l'une quelconque des revendications 7 à 11, dans lequel le sélecteur de taux (8) est agencé pour utiliser une zone morte avec un intervalle entre une limite inférieure de -0.1 m/s$^2$ et une lumière supérieure de 0,2 $m/s^2$.

13. Véhicule routier (1), **caractérisé en ce qu'**il comprend un agencement (2) selon l'une quelconque des revendications 7 à 12.

$a_{lat}$ → [ 10 ] → $+$ — 7 — $e$ → [ 8 ] — $T_R$ → [ 9 ] → $T_{LIM}$

6

$a_{lat,R79}$

Fig.1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Vehicle Dynamics and Control. **RAJAMANI ; RAJESH.** Lateral Vehicle Dynamics. Springer, 2012, 20-31